# FASCICULE DE BREVET EUROPEEN

(11) **EP 1 079 994 B1**
(45) Date de publication et mention de la délivrance du brevet: **23.04.2003**
(21) Numéro de dépôt: 99919328.7
(22) Date de dépôt: 14.05.1999
(51) Int. Cl.: B60R 21/09

(54) **DISPOSITIF DE FRAGILISATION D'UN AXE DE PIVOTEMENT D'UNE PEDALE AUTOMOBILE**
VORRICHTUNG ZUR VESPRÖDUNG EINER KRAFTFAHRZEUGPEDAL-DREHACHSE
DEVICE FOR THE EMBRITTLEMENT OF A MOTOR VEHICLE PEDAL PIVOT PIN

(30) Priorité: 20.05.1998 FR 9806507
(43) Date de publication de la demande: 07.03.2001
(73) Titulaire: GIAT INDUSTRIES, 78000 Versailles (FR)
(72) Inventeur: VIDOT, Jean-Paul, F-65320 Bordères sur l'Echez (FR)
(74) Mandataire: Célanie, Christian
(86) Numéro de dépôt international: FR9901154
(87) Numéro de publication internationale: WO99059844

(56) Documents cités:
- DE-A- 19 515 852
- DE-C- 19 617 372
- FR-A- 2 764 715
- GB-A- 2 322 836
- US-A- 5 314 206

## Description

Le domaine technique de l'invention est celui des dispositifs de fragilisation d'un élément mécanique, notamment des dispositifs de fragilisation utilisés dans les systèmes de sécurité automobile.

On connaît notamment par le brevet DE19515852 un dispositif permettant de désolidariser par voie pyrotechnique une pédale de frein d'un véhicule automobile de son axe support.

Ce système met en oeuvre des boulons explosifs qui, lorsqu'ils sont initiés consécutivement à la détection d'un choc, permettent de libérer la pédale de son support ce qui évite les graves blessures généralement occasionnées par celle-ci sur les jambes et chevilles du conducteur en cas de choc frontal.

L'inconvénient majeur d'un tel dispositif est qu'en cas d'initiation intempestive des boulons explosifs, il y a perte totale de la possibilité d'utiliser la pédale de frein, ce qui nuit gravement à la sécurité d'emploi du véhicule.

Le brevet DE19617372 décrit un dispositif analogue dans lequel un système pyrotechnique assure la rupture de la liaison entre une pédale de frein et la tige du maître cylindre ou entre la pédale de frein et son articulation. Après actionnement d'un tel dispositif aucune capacité de freinage n'est possible.

On connaît par ailleurs divers systèmes mécaniques qui sont dotés de moyens de fragilisation. On pourra citer par exemple : les étages d'un propulseur fusée qui doivent se séparer en vol, les suspentes d'un parachute soutenant une charge et qui doivent pouvoir être libérées en urgence, la colonne de direction d'un véhicule qui doit pouvoir être écartée du conducteur en cas d'accident.

Le brevet US5314206 décrit par ailleurs un dispositif de sécurité pour sièges de véhicules automobiles. Ce dispositif comprend un piston qui est déplacé par des moyens moteurs lors de l'attache de la ceinture par un passager et qui assure un renforcement de la liaison siège / glissière.

Dans tous les cas la réalisation d'une zone pré fragilisée dès la conception nuit à la tenue mécanique du dispositif, donc à sa sûreté d'emploi.

On choisit donc de préférence de ne pas fragiliser mais de provoquer délibérément une rupture en cas de besoin (le plus souvent par voie pyrotechnique). Or une initiation intempestive ne permet plus alors un fonctionnement normal de l'élément ce qui peut nuire à la sécurité.

C'est le but de l'invention que de proposer un dispositif de fragilisation d'un axe de pivotement d'une pédale automobile ne présentant pas de tels inconvénients.

Ainsi le dispositif de fragilisation selon l'invention a une structure telle que, même en cas d'actionnement intempestif de la fragilisation, un certain degré d'utilisation de la pédale reste possible.

L'invention a donc pour objet un dispositif de fragilisation d'un axe de pivotement d'une pédale automobile, dispositif caractérisé en ce que l'axe comporte au moins une amorce de rupture et au moins un moyen de renfort disposé au droit de l'amorce de rupture et permettant d'accroître la résistance de l'axe, le moyen de renfort étant susceptible de se déplacer sous l'action d'un moyen moteur pour se positionner à distance de l'amorce de rupture assurant ainsi la fragilisation de l'axe.

Selon un mode particulier de réalisation, l'amorce de rupture est réalisée sous la forme d'une réduction de la surface cisaillable, le moyen de renfort étant disposé au droit de l'amorce de rupture et permettant ainsi d'accroître la surface à cisailler.

Selon un autre mode de réalisation, le moyen de renfort pourra comporter des moyens assurant sa liaison en rotation avec l'axe de part et d'autre de l'amorce de rupture assurant ainsi un renforcement en torsion de l'axe.

Avantageusement, le moyen moteur comprend un générateur de gaz pyrotechnique.

L'axe pourra être une tige creuse comportant au moins une gorge constituant l'amorce de rupture et le moyen de renfort pourra être constitué par au moins un piston déplaçable par la pression des gaz.

Selon une autre caractéristique, le piston pourra être maintenu axialement par un verrou cisaillable.

Selon un mode particulier de réalisation, la tige creuse pourra comporter deux gorges constituant des amorces de rupture, et deux moyens de renfort, un premier moyen de renfort constitué par un premier piston et un deuxième moyen de renfort constitué par un deuxième piston creux, le deuxième piston étant en appui sur le premier piston de façon à pouvoir pousser axialement celui-ci.

Le deuxième piston pourra être obturé par un paillet recevant la pression des gaz et susceptible de se rompre à partir d'un certain niveau de pression.

Les pistons seront avantageusement en appui l'un sur l'autre par l'intermédiaire de surfaces coniques complémentaires.

Le piston pourra comporter un épaulement coopérant en fin de course avec une butée solidaire de la tige.

L'axe pourra permettre le pivotement de la pédale automobile par rapport à une chape, les amorces de ruptures étant disposées au droit des ailes de la chape.

L'invention sera mieux comprise à la lecture de la description qui va suivre de divers modes de réalisation, description faite en référence aux dessins annexés et dans lesquels ;
- la figure 1 est une vue en coupe d'un dispositif de fragilisation suivant un premier mode de réalisation de l'invention, dispositif représenté avant fonctionnement,
- la figure 2 est une vue analogue à la précédente représentée après fonctionnement,
- la figure 3 est un vue en coupe d'un dispositif de fragilisation suivant un deuxième mode de réalisation de l'invention, dispositif représenté avant fonctionnement,
- la figure 4 est une vue analogue à la précédente représentée après fonctionnement.

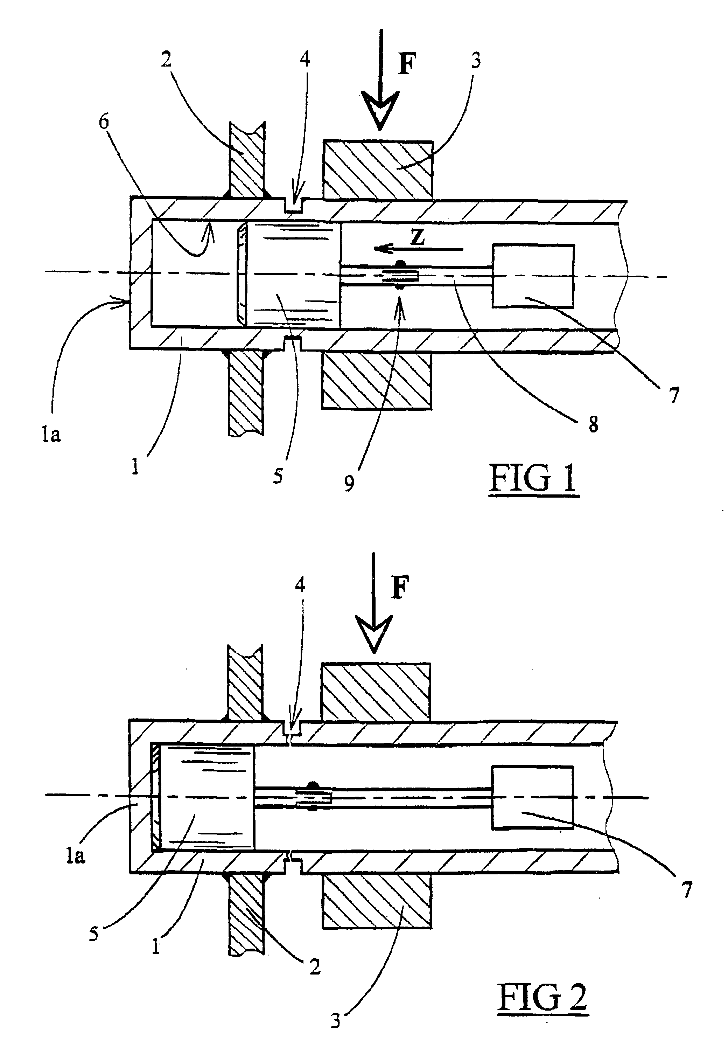

En se reportant à la figure 1, un élément mécanique 1, qui est un axe de pivotement d'une pédale automobile a la forme d'un tube obturé à une de ses extrémités par une cloison la. Ce tube est fixé à un support 2 (tel qu'une aile d'une chape) par exemple par soudure ou sertissage et il reçoit une pédale pivotante 3. Il est nécessaire de pouvoir séparer à un moment donné la pédale 3 du support 2 et à cette fin un dispositif de fragilisation de l'élément de liaison 1 est prévu.

L'élément 1 à fragiliser comporte ainsi une amorce de rupture 4 qui est constituée ici par une gorge annulaire assurant une réduction de la surface cisaillable du tube.

L'amorce de rupture est disposée entre la pédale 3 et le support 2. Ainsi une action sur la pédale engendre un effort F sur l'élément 1 et une réaction opposée est exercée par le support 2 sur ledit élément. Il en résulte donc une contrainte de cisaillement au niveau de l'amorce de rupture 4.

Selon l'invention un moyen de renfort 5 est prévu au niveau de l'amorce de rupture 4. Ce moyen est constitué par un piston cylindrique coulissant dans l'alésage cylindrique 6 du tube. Du fait de sa disposition au droit de l'amorce de rupture 4, le piston augmente fortement la section à cisailler à ce niveau et assure la résistance de l'élément mécanique.

Selon l'invention, le moyen de renfort 5 est susceptible de se déplacer en translation suivant la direction Z sous l'action d'un moyen moteur 7 pour se positionner à distance de l'amorce de rupture 4.

Le moyen moteur 7 pourra être constitué par exemple par un actionneur à commande électrique (tel un micromoteur) qui poussera une tige 8 fixée au piston 5 par une articulation 9.

Une électronique de commande (non représentée) provoquera la mise en route du moyen moteur lorsque la fragilisation de l'élément 1 sera souhaitée.

La figure 2 montre le système lorsque le moyen moteur a poussé le piston 5. Ce dernier est en butée contre la cloison 1a, il ne se trouve donc plus en regard de l'amorce de rupture 4. L'élément 1 se trouve fragilisé et la contrainte de cisaillement provoquée par la pédale 3 entraîne la rupture de l'élément 1 au niveau de l'amorce de rupture 4.

On voit que le dispositif selon l'invention permet d'une façon simple de définir un élément mécanique dont la résistance au cisaillement ne se trouve pas affectée lorsque le moyen de renfort se trouve positionné au niveau de l'amorce de rupture. La commande du déplacement du moyen de renfort ne provoque pas directement la rupture comme dans les systèmes connus mais entraîne uniquement une réduction de la résistance au cisaillement qui conduit à la rupture lorsque la charge correspond aux spécifications prévues.

L'Homme du Métier dimensionnera aisément l'amorce de rupture de façon à définir un système qui ne se rompra que pour une valeur de l'effort F donnée. On voit donc que si le système ne se trouve pas dans une condition opérationnelle avec une pédale sur laquelle on exerce une force F donnée, un déplacement du moyen de renfort ne conduira pas à la rupture de l'élément 1.

Ainsi une pédale de frein pourra donc être dimensionné de façon à se rompre pour un effort donné correspondant à celui apparaissant lors d'un impact frontal d'une certaine énergie. On évitera ainsi les blessures graves occasionnées par les pédales sur les jambes des conducteurs. Cette pédale pourra par ailleurs résister à un effort normal résultant du freinage exercé par le conducteur lors d'un incident de gravité moindre. Ainsi un déclenchement intempestif du moyen moteur ne diminuera pas les possibilités de freinage offertes au conducteur et la sécurité de la conduite se trouvera maintenue.

Le moyen moteur pourra à titre de variante être un actionneur pneumatique ou hydraulique. Il pourra avantageusement être constitué par un générateur de gaz pyrotechnique.

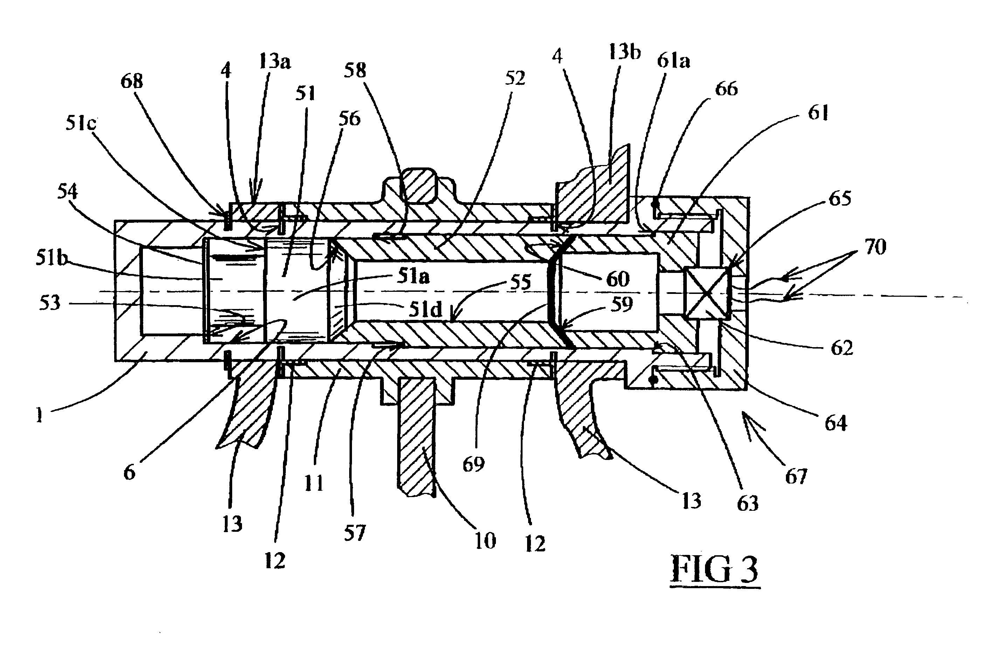

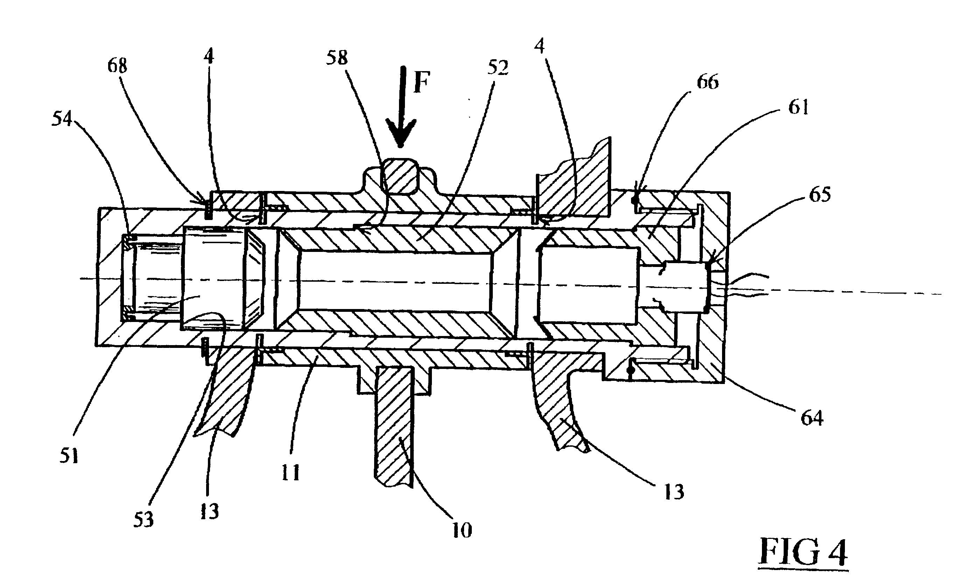

Les figures 3 et 4 montrent ainsi un deuxième mode de réalisation de l'invention mettant en oeuvre un composant pyrotechnique générateur de gaz (par exemple un inflammateur).

La figure 3 montre le système à l'état de repos (avant fonctionnement). L'élément mécanique 1 est ici un axe de pivotement pour une pédale de frein 10 d'un véhicule automobile.

La pédale 10 est solidaire (par exemple par sertissage) d'un manchon 11 monté libre en rotation sur l'axe 1. Des coussinets 12 sont interposés entre l'axe 1 et le manchon 11.

L'axe 1 est par ailleurs supporté par une chape 13 solidaire au plancher du véhicule. La chape comporte deux ailes 13a et 13b, et l'axe 1 comporte ici deux amorces de ruptures annulaires 4, chaque amorce étant interposée entre le manchon 11 et une aile 13a ou 13b. L'axe comporte une tête élargie 67 qui vient en appui sur une des ailes 13b de la chape 13. Il est immobilisé par rapport à la chape 13 au moyen d'une rondelle fendue 68 disposée dans une gorge de l'axe.

L'axe est creux et contient deux pistons de renfort 51 et 52, un pour chaque amorce de rupture, chaque piston présente une surface externe cylindrique permettant son coulissement dans l'alésage 6 de l'axe 1.

Le premier piston 51 est plein et comporte une partie 51a de même diamètre que l'alésage 6 de l'axe 1 et une autre partie 51b de diamètre réduit. L'épaulement 51c formé par le raccordement entre ces deux parties est destiné à coopérer avec une butée annulaire 53 aménagée sur l'alésage 6 de l'axe 1. Le piston présente également une collerette mince 54 portée par son extrémité de diamètre réduit. Cette collerette est en appui contre la butée annulaire 53 lorsque le dispositif se trouve dans l'état "avant fonctionnement" représenté à la figure 3. Elle constitue un verrou cisaillable destiné à ce rompre pour autoriser le déplacement du premier piston 51 (figure 4).

Alternativement il est possible de remplacer la collerette 54 par une rondelle distincte du piston 51.

Le deuxième piston 52 est creux et comporte donc un alésage axial 55. Il présente une première extrémité conique 56 qui est en appui sur un profil conique complémentaire 51d porté par le premier piston 51. Sa surface cylindrique externe présente un épaulement 57 qui est destiné à coopérer avec une surface de butée 58 aménagée dans l'alésage 6.

Le deuxième piston 52 comporte une deuxième extrémité conique 59 qui coopère avec une surface conique complémentaire 60 d'un support 61 d'un inflammateur 62 à commande électrique.

Le support d'inflammateur 61 est une pièce tubulaire qui est disposée dans l'alésage 6 de l'axe 1. Il assure l'immobilisation axiale des deux pistons 51, 52 et permet également de positionner un inflammateur pyrotechnique 62. Le support 61 est lui même immobilisé axialement par rapport à l'axe 1 par la coopération d'un épaulement 61a avec un lamage complémentaire 63 réalisé sur l'axe 1. Un bouchon 64 est vissé sur l'axe 1. Il assure le maintien de l'inflammateur 62 ainsi que l'étanchéité aux gaz du volume interne à l'axe 1 (au moyen de joints toriques 65, 66).

L'inflammateur 62 est relié par des conducteurs 70 à un dispositif de commande électronique (non représenté) qui comportera notamment un capteur de décélération et qui provoquera l'initiation des différents systèmes de sécurité pyrotechnique du véhicule en réponse à un choc.

Un paillet 69 c'est à dire une feuille métallique mince (en aluminium par exemple) d'une épaisseur de quelques dixièmes de millimètres est pincé entre le support 61 et le deuxième piston 52. Il obture l'alésage axial 55 de celui-ci.

Le fonctionnement de ce dispositif est le suivant.

A l'état de repos (figure 3) un piston 51,52 se trouve en regard de chaque amorce de rupture 4. La résistance mécanique au cisaillement de l'axe 1 se trouve donc renforcée.

Les pistons sont immobilisés axialement par rapport à l'axe dans leur position de renfort. Le bouchon 64 maintient l'inflammateur 62 qui lui même applique le support 61 sur l'axe et sur le deuxième piston 52. Ce dernier est en appui contre le premier piston 51 qui est en butée contre l'axe 1 par l'intermédiaire de la collerette 54.

Lors de la détection par l'électronique de l'automobile d'une forte décélération, liée par exemple à un choc frontal, l'inflammateur 62 est initié.

Les gaz engendrés par l'inflammateur se développent à l'intérieur du support 61 et leur pression s'exerce sur le paillet 69 qui assure un confinement temporaire des gaz. Les deux pistons 52 et 51 sont poussés axialement simultanément par l'intermédiaire du paillet 69, ce qui provoque la rupture de la collerette 54. Les épaisseurs relatives de la collerette et du paillet auront été définies pour que la collerette 54 soit rompue avant le paillet 69.

Les deux pistons 51 et 52 sont donc poussés axialement et chacun vient en contact avec sa butée annulaire 53 ou 58.

Le dispositif adopte alors la configuration représentée à la figure 4. Les deux amorces de rupture 4 sont dégagées par les pistons 51 et 52 qui restent en position déverrouillée comme suite à la pression des gaz qui est maintenue à l'intérieur de l'axe 1 grâce aux moyens d'étanchéité 65, 66.

Les surfaces coniques 56/51d et 59/60 favorisent le déplacement axial des pistons 51 et 52 lorsque ces derniers sont soumis à un effort radial. Une telle disposition favorise le dégagement des amorces de rupture, même si la position axiale finale des pistons n'est pas tout à fait correcte. Une contrainte de flexion appliquée sur l'axe 1 aura donc pour effet de favoriser le dégagement des amorces de rupture. On accroît ainsi la fiabilité du dispositif.

Après initiation de l'inflammateur et déplacement des pistons, l'axe 1 se trouve donc fragilisé en cisaillement. Lorsque l'effort F auquel il est soumis dépasse un certain niveau il se rompt, libérant la pédale 10.

Ainsi si une initiation intempestive de l'inflammateur 62 intervient, la pédale se trouve fragilisée mais pas rompue. Il est donc possible pour le conducteur de la manoeuvrer par exemple pour freiner ce qui accroît la sûreté du dispositif.

Lorsque un choc réel intervient, le niveau de résistance de l'axe 1 est insuffisant et la pédale se rompt sans venir provoquer de graves blessures des membres inférieurs du conducteur.

Les différentes pièces de l'axe pourront être réalisées en métal ou en matière plastique. L'homme du métier définira aisément les dimensions (notamment des amorces de rupture) pour assurer les différents niveaux de résistance souhaités.

On définira par exemple le dispositif pour qu'à l'état de repos l'axe résiste à un effort de cisaillement de 600 kg et qu'à l'état fragilisé il se rompe pour un effort de cisaillement de 300 kg.

A titre de variante, il est possible de définir un dispositif de fragilisation adapté à un élément sollicité en torsion.

Une telle variante sera utilisée par exemple pour fragiliser l'axe de pivotement reliant dans les véhicules anglo saxons (à conduite à droite) la pédale, située à droite dans l'habitacle, et la commande du maître cylindre qui est toujours disposé à gauche comme dans les véhicules à conduite à gauche.

On disposera alors comme dans les modes de réalisation précédents une amorce de rupture de l'élément mécanique, telle une gorge annulaire, et un moyen de renfort coulissant disposé au niveau de l'amorce de rupture.

Cependant on prévoira dans ce cas un moyen de renfort comportant des moyens de liaison en rotation avec l'élément à fragiliser afin d'assurer une solidarisation en rotation (donc en torsion) de part et d'autre de l'amorce de rupture annulaire entre l'élément mécanique et son moyen de renfort.

On pourra par exemple aménager des cannelures ou des dentelures sur la surface cylindrique externe du moyen de renfort et coopérant avec des profils complémentaires réalisées sur la surface interne de l'élément à fragiliser de part et d'autre de l'amorce de rupture annulaire.

Ainsi une sollicitation en torsion de l'élément mécanique sollicitera également en torsion le moyen de renfort. La résistance à la torsion de l'élément mécanique sera donc assurée. La commande de déplacement du moyen de renfort (par exemple au moyen des gaz engendrés par un inflammateur pyrotechnique) positionnera celui-ci à distance de l'amorce de rupture. Le moyen de renfort se trouvera alors d'un seul et même côté de l'amorce de rupture annulaire, il en résultera une fragilisation de l'élément mécanique sollicité en torsion.

## Revendications

1. Dispositif de fragilisation d'un axe (1) de pivotement d'une pédale automobile, dispositif ***caractérisé en ce que*** l'axe comporte au moins une amorce de rupture (4) et au moins un moyen de renfort (5,51,52) disposé au droit de l'amorce de rupture et permettant d'accroître la résistance de l'axe, le moyen de renfort étant susceptible de se déplacer sous l'action d'un moyen moteur (7,62) pour se positionner à distance de l'amorce de rupture (4) assurant ainsi la fragilisation de l'axe (1).

2. Dispositif de fragilisation selon la revendication 1, **caractérisé en ce que** l'amorce de rupture (4) est réalisée sous la forme d'une réduction de la surface cisaillable, le moyen de renfort (5,51,52) étant disposé au droit de l'amorce de rupture et permettant ainsi d'accroître la surface à cisailler.

3. Dispositif de fragilisation selon une des revendications 1 ou 2, **caractérisé en ce que** le moyen de renfort comporte des moyens assurant sa liaison en rotation avec l'axe de part et d'autre de l'amorce de rupture assurant ainsi un renforcement en torsion de l'axe.

4. Dispositif de fragilisation selon une des revendications 1 à 3, **caractérisé en ce que** le moyen moteur comprend un générateur de gaz pyrotechnique (62).

5. Dispositif de fragilisation selon la revendication 4, **caractérisé en ce que** l'axe (1) est une tige creuse comportant au moins une gorge (4) constituant l'amorce de rupture et **en ce que** le moyen de renfort est constitué par au moins un piston (51,52) déplaçable par la pression des gaz.

6. Dispositif de fragilisation selon la revendication 5, **caractérisé en ce que** le piston (51) est maintenu axialement par un verrou cisaillable (54).

7. Dispositif de fragilisation selon la revendication 6, **caractérisé en ce que** la tige creuse (1) comporte deux gorges (4) constituant des amorces de rupture, et deux moyens de renfort (51,52), un premier moyen de renfort constitué par un premier piston (51) et un deuxième moyen de renfort constitué par un deuxième piston creux (52), le deuxième piston étant en appui sur le premier piston de façon à pouvoir pousser axialement celui-ci.

8. Dispositif de fragilisation selon la revendication 7, **caractérisé en ce que** le deuxième piston (52) est obturé par un paillet (69) recevant la pression des gaz et susceptible de se rompre à partir d'un certain niveau de pression.

9. Dispositif de fragilisation selon une des revendications 7 ou 8, **caractérisé en ce que** les pistons (51,52) sont en appui l'un sur l'autre par l'intermédiaire de surfaces coniques complémentaires (56,51d).

10. Dispositif de fragilisation selon une des revendications 5 à 9, **caractérisé en ce que** le piston (51,52) comporte un épaulement (51c,57) coopérant en fin de course avec une butée (53,58) solidaire de la tige (1).

11. Dispositif de fragilisation selon une des revendications 1 à 10, **caractérisé en ce que** l'axe (1) permet le pivotement de la pédale (10) automobile par rapport à une chape (13), les amorces de ruptures (4) étant disposées au droit des ailes (13a,13b) de la chape.

## Claims

1. An embrittlement device for a swivel pin (1) of an automobile pedal, such device **characterised in that** the pin incorporates at least one incipient fracture (4) and at least one reinforcement means (5, 51, 52) at right angles to the incipient fracture and strengthening the pin, the reinforcement means being able to be displaced under the action of drive means (7, 62) to take up a position at a distance from the incipient fracture (4) thereby ensuring the embrittlement of the pin (1).

2. An embrittlement device according to Claim 1, **characterised in that** the incipient fracture (4) is made in the form of a reduction of the shearable surface, the reinforcement means (5, 51, 52) being placed at right angles to the incipient fracture thus enabling the shearable surface to be increased.

3. An embrittlement device according to one of Claims 1 or 2, **characterised in that** the reinforcement means comprise means ensuring their connection in rotation with the pin on each side of the incipient fracture thereby ensuring a reinforcement in torsion of the pin.

4. An embrittlement device according to one of Claims 1 to 3, **characterised in that** the drive means comprise a pyrotechnic gas generator (62).

5. An embrittlement device according to Claim 4, **characterised in that** the pin (1) is a hollow rod incorporating at least one groove (4) forming the incipient fracture and **in that** the reinforcement means are constituted by at least one piston (51, 52) able to be displaced by the gas pressure.

6. An embrittlement device according to Claim 5, **characterised in that** the piston (51) is held axially in place by a shearable lock (54).

7. An embrittlement device according to Claim 6, **characterised in that** the hollow rod (1) incorporates two grooves (4) constituting incipient fractures, and two reinforcement means (51, 52), first reinforcement means constituted by a first piston (51) and second reinforcement means constituted by a second hollow piston (52), the second piston pressing on the first piston such as to be able to push it axially.

8. An embrittlement device according to Claim 7, **characterised in that** the second piston (52) is obturated by a sealing fail (69) receiving the gas pressure and able to fracture over a certain pressure rate.

9. An embrittlement device according to one of Claims 7 or 8, **characterised in that** pistons (51, 52) press against one another via matching conical surfaces (56, 51d).

10. An embrittlement device according to one of Claims 5 to 9, **characterised in that** the piston (51, 52) incorporates a shoulder (51c, 57) co-operating at the end of its stroke with an abutment (53, 58) integral with the rod (1).

11. An embrittlement device according to one of Claims 1 to 10, **characterised in that** pin (1) allows the automobile pedal (10) to swivel with respect to a fork joint (13), the incipient fractures (4) being located on either side of the wings (13a, 13b) of the fork joint.

## Patentansprüche

1. Vorrichtung zur Versprödung einer Drehachse (1) eines Kraftfahrzeugpedals, Vorrichtung ***dadurch gekennzeichnet, dass*** die Achse wenigstens eine Sollbruchstelle (4) und wenigstens ein Verstärkungsmittel (5, 51, 52) aufweist, welches geradlinig zur Sollbruchstelle angeordnet ist und es ermöglicht, die Festigkeit der Achse zu erhöhen, wobei das Verstärkungsmittel geeignet ist, sich unter der Einwirkung eines Antriebsmittels (7, 62) zu verlagern, um eine von der Sollbruchstelle (4) beabstandete Position einzunehmen, um so die Versprödung der Achse (1) zu gewährleisten.

2. Vorrichtung zur Versprödung nach Anspruch 1, **dadurch gekennzeichnet, dass** die Sollbruchstelle (4) in der Form einer Abschwächung der abscherbaren Fläche ausgeführt ist, wobei das Verstärkungsmittel (5, 51, 52) geradlinig zur Sollbruchstelle angeordnet ist und so die abzuscherende Fläche vergrößert.

3. Vorrichtung zur Versprödung nach einem der Ansprüche 1 oder 2, **dadurch gekennzeichnet, dass** das Verstärkungsmittel Mittel umfasst, welche seine Drehverbindung mit der Achse beiderseits der Sollbruchstelle gewährleistet, indem so eine Verstärkung bei der Verdrehung der Achse gewährleistet wird.

4. Vorrichtung zur Versprödung nach einem der Ansprüche 1 bis 3, **dadurch gekennzeichnet, dass** das Antriebsmittel einen pyrotechnischen Gaserzeuger (62) umfasst.

5. Vorrichtung zur Versprödung nach Anspruch 4, **dadurch gekennzeichnet, dass** die Achse (1) eine hohle Stange mit wenigstens einer die Sollbruchstelle bildenden Nut (4) ist und das Verstärkungselement von wenigstens einem durch den Gasdruck verschiebbaren Kolben (51, 52) gebildet wird.

6. Vorrichtung zur Versprödung nach Anspruch 5, **dadurch gekennzeichnet, dass** der Kolben (51) axial durch einen Scherbolzen (54) festgehalten wird.

7. Vorrichtung zur Versprödung nach Anspruch 6, **dadurch gekennzeichnet, dass** die hohle Stange (1) zwei die Sollbruchstellen bildenden Nuten (4) und zwei Verstärkungsmittel (51, 52) aufweist, ein erstes von einem ersten Kolben (51) gebildetes Verstärkungsmittel und ein zweites von einem zweiten hohlen Kolben (52) gebildetes Verstärkungsmittel, wobei der zweite Kolben sich so gegen den ersten Kolben abstützt, um diesen axial verschieben zu können.

8. Vorrichtung zur Versprödung nach Anspruch 7, **dadurch gekennzeichnet, dass** der zweite Kolben (52) durch ein Plättchen (69) verschlossen wird, das den Gasdruck aufnimmt und geeignet ist, ab einem bestimmten Druckniveau zu brechen.

9. Vorrichtung zur Versprödung nach einem der Ansprüche 7 oder 8, **dadurch gekennzeichnet, dass** die Kolben (51, 52) gegenseitig miteinander zur Anlage mittels zugehöriger konischer Flächen (56, 51d) kommen.

10. Vorrichtung zur Versprödung nach einem der Ansprüche 5 bis 9, **dadurch gekennzeichnet, dass** der Kolben (51, 52) eine Schulter (51c, 57) aufweist, die am Ende des Weges mit einem einstückig mit der Stange (1) ausgebildeten Anschlag (53, 58) zusammenwirkt.

11. Vorrichtung zur Versprödung nach einem der Ansprüche 1 bis 10, **dadurch gekennzeichnet, dass** die Achse (1) die Drehung des Kraftfahrzeugpedals (10) in Bezug auf eine Abdeckung (13) ermöglicht, wobei die Sollbruchstellen (4) geradlinig zu den Flügeln (13a, 13b) der Abdeckung angeordnet sind.
